# EUROPÄISCHE PATENTSCHRIFT

(11) **EP 2 678 100 B1**
(45) Veröffentlichungstag und Bekanntmachung des Hinweises auf die Patenterteilung: **16.07.2014**
(21) Anmeldenummer: 11801977.7
(22) Anmeldetag: 09.12.2011
(51) Int. Cl.: B01J 8/06

(54) **ROHRBÜNDELREAKTOR MIT EINER STRUKTURIERTEN PACKUNG UND EINER HALTERUNG**
MULTI-TUBE REACTOR HAVING A STRUCTURED PACKING AND A HOLDER
RÉACTEUR À FAISCEAU TUBULAIRE POURVU D'UN GARNISSAGE STRUCTURÉ ET UN SUPPORT

(30) Priorität: 21.02.2011 DE 102011011895
(43) Veröffentlichungstag der Anmeldung: 01.01.2014
(73) Patentinhaber: Air Liquide Global E&C Solutions Germany GmbH, 60439 Frankfurt am Main (DE)
(72) Erfinder: CASTILLO-WELTER, Frank, 61381 Friedrichsdorf (DE); WALTER, Dominic, 64289 Darmstadt (DE); STEDEN, Christoph, 61440 Oberursel (DE); ZEYEN, Rudolf, 60435 Frankfurt am Main (DE)
(86) Internationale Anmeldenummer: PCT/EP2011/006198
(87) Internationale Veröffentlichungsnummer: WO 2012/113427

(56) Entgegenhaltungen:
- EP-A1- 1 661 860
- WO-A1-2006/083098
- WO-A1-2006/091005

## Beschreibung

### Gebiet der Erfindung

Die Erfindung betrifft einen Rohrreaktor zur Durchführung einer heterogen katalysierten chemischen Reaktion in der Gasphase bei erhöhter Temperatur und anschließender Kühlung der Gasphase, wobei der Reaktor stehend angeordnet ist, sodass die Rohre senkrecht vom oberen Gasverteilerraum, durch den Mantelraum, zum unteren Gassammelraum verlaufen. Der Mantelraum ist in eine Reaktions- und eine Kühlzone unterteilt. Im Bereich der Reaktionszone sind die Rohre mit einem Bett aus Katalysatormaterial gefüllt. Im Bereich der Kühlzone sind die Rohre mit inertem Material gefüllt.

### Stand der Technik

Rohrbündelreaktoren gehören zur Kategorie der Rohrreaktoren, welche grundsätzlich in Ullmann's Encyclopedia of Industrial Chemistry, Vol. 37, 6th Edition beschrieben werden. Rohrreaktoren sind besonders zur Durchführung von homogenen Reaktionen in der Gasphase bei erhöhter Temperatur geeignet.

Die Patentschrift DE 30 42 468 C2 behandelt speziell Rohrbündelreaktoren. Diese sind wie Rohrbündelwärmetauscher aufgebaut, wobei die Gasphase durch die, jeweils mit einem Katalysatorbett gefüllten Rohre strömt und im Reaktormantel flüssiges Wärmeträgermedium zirkuliert. Der Reaktor kann auch in eine Reaktions- und eine Kühlzone unterteilt werden, indem der Mantelbereich durch eine Trennplatte, durch die die Rohre hindurch geführt werden, in zwei Zonen unterteilt wird. Dabei ist es möglich, dass die Zonen jeweils mit einem separaten Wärmeträgerkreislauf ausgestattet sind, oder dass sie nacheinander von einem Kreislauf durchflossen werden.

Die Rohre sind dabei im Bereich der Reaktionszone mit einem Katalysator- und im Bereich der Kühlzone mit einem inerten Feststoffbett gefüllt. Das inerte Feststoffbett hat die Aufgabe, den Wärmeübergang zwischen Gas und Rohrwand zu verbessern.

Es ist auch möglich, dass die Reaktionszone in mehrere Abschnitte unterteilt ist, in denen jeweils unterschiedliches Katalysatormaterial eingesetzt ist und die auch jeweils mit einem separat temperierbaren Wärmeträgerkreislauf ausgestattet sein können.

Beim Betrieb des Reaktors kann nun der Fall eintreten, dass es neben der beabsichtigten heterogen katalysierten Reaktion auch zu Nebenreaktionen kommt, die zur Bildung von flüssigen oder festen Nebenprodukten führen. Diese Nebenprodukte kondensieren bevorzugt im Feststoffbett der Kühlzone, wodurch die Gasdurchlässigkeit beeinträchtigt und eine Reinigung erforderlich wird.

Eine mögliche Methode zur Reinigung des Feststoffbetts besteht darin, die abgelagerten Nebenprodukte thermisch zu zersetzen. Bei der dabei notwendigen Aufheizung des Feststoffbetts der Kühlzone ist oft aber auch eine hohe Temperaturbelastung und damit eine Schädigung des Katalysators in der Reaktionszone nicht zu vermeiden. Um den Katalysator zu schonen, bleibt dann nur die Möglichkeit, das verschmutzte Feststoffbett aus den Rohren zu entfernen und durch ein neues oder ein gereinigtes zu ersetzen. Da dies nicht im Normalbetrieb des Reaktors möglich ist, werden hierdurch erhebliche Stillstandszeiten verursacht. Ferner ist der Arbeitsaufwand für die Entleerung und Neubefüllung der Reaktionsrohre beträchtlich. Dies gilt insbesondere für Rohrreaktoren, bei denen viele Reaktorrohre parallel angeordnet sind.

Besonders bei großen Reaktoren, den sogenannten Rohrbündelreaktoren, die bis zu mehrere tausend Rohre umfassen können, sind die Rohre oft senkrecht angeordnet. Bei dieser Anordnung können die Rohre leicht von oben mit dem Inert- und dem Katalysatormaterial gefüllt werden. Da eine Befüllung der Rohre mit losem Material von unten nicht möglich ist, muß, um das im unteren Teil der Rohre befindliche Inertmaterial auszutauschen, zunächst der gesamte Rohrinhalt, also auch das Katalysatormaterial, aus den Rohren nach unten abgelassen werden, und anschließend die Rohre wieder von oben befüllt werden.

Beim Ablassen des Materials aus den Rohren kommt es meistens zu einer Vermischung von Katalysator- und Inertmaterial bzw. der verschiedenen Katalysatorsorten, die auf wirtschaftliche Art nicht mehr zu trennen ist, sodass dabei viel Katalysatormaterial verloren geht.

Es bestand daher die Aufgabe einen Rohrbündelreaktor zu konzipieren, bei dem die Reinigung der Kühlzone mit geringerem Arbeitsaufwand und geringen Verlusten an Katalysatormaterial erfolgen kann.

### Beschreibung:

Die Aufgabe wird im Wesentlichen durch die Gesamtheit der Merkmale des Anspruchs 1 dadurch gelöst, dass im Bereich der Kühlzone des Rohrreaktors das eine Schüttung bildende, lose Inertmaterial des Feststoffbetts in den Rohren, durch eine strukturierte Packung ersetzt wird. Der Vorteil dieser Maßnahme besteht darin, dass derartige Packungen, nachdem sie von unten aus den Rohren entfernt wurden, auch wieder von unten in die Rohre eingeführt werden können, sodass das Katalysatormaterial an seinem Platz verbleiben kann.

Das Katalysatorbett und die strukturierte Packung werden durch eine, jeweils an ihrem unteren Ende installierte, gasdurchlässige, herausnehmbare Halterung in ihrer Position gehalten. Auch die obere Öffnung der Rohre kann mit einem gasdurchlässigen Verschluss versehen sein.

Mit dem erfindungsgemäßen Rohrreaktor wurde überrschend eine Vorrichtung gefunden, die Betriebsunterbrechungen und Wartungsaufwand, sowie die damit verbundenen Zeiten und Kosten, signifikant reduziert.

In einer besonderen Ausgestaltung der Erfindung ist die Reaktionszone in mehrere aufeinanderfolgende Abschnitte unterteilt, wobei rohrseitig die Art und Menge des Katalysatormaterials von Abschnitt zu Abschnitt variiert werden kann und wobei mantelseitig jeder Abschnitt mit einem separat einstellbaren Beheizungssystem ausgestattet ist. Durch diese Ausstattung des Rohrbündelreaktors ist es möglich, den Verlauf der Reaktion gezielt zu beeinflussen.

In einer weiteren, besonderen Ausgestaltung der Erfindung wird die strukturierte Packung entlang ihrer Längsachse in mehrere Teile zerlegt.

Diese Teile werden nacheinander von unten in das jeweilige Rohr geschoben, worauf unterhalb des letzten Teils der Packung eine gasdurchlässige Halterung oder ein gasdurchlässiger Rohrverschluss installiert wird, um ein Herausrutschen der Packungen zu verhindern.

Die Aufteilung der Packungen hat den Vorteil, dass die Packungen in dem engen Gassammelraum leichter gehandhabt werden können.

Die Erfindung betrifft ferner ein Verfahren zum Austausch der strukturierten Packung in der Kühlzone eines Rohrreaktors; es umfasst folgende Arbeitsschritte:
a) Außerbetriebnahme des Rohrreaktors,
b) optional Abkühlen und/oder Inertisieren des Rohrreaktors,
c) Öffnen des Zugangs zur Kühlzone an der Unterseite des Rohrreaktors,
d) Entnahme der strukturierten Packung,
e) Einsetzen einer neuen strukturierten Packung oder der gereinigten Originalpackung,
f) Verschließen des Zugangs zur Kühlzone an der Unterseite des Rohrreaktors,
g) Wiederinbetriebnahme des Rohrreaktors.

Der erfindungsgemäße Rohrreaktor kann vorteilhaft für eine Vielzahl von heterogen katalysierten Reaktionen eingesetzt werden, wobei seine Verwendung zur Durchführung von Selektivoxidationsreaktionen besonders bevorzugt wird. Beispiele für solche Reaktionen sind die Umsetzung von Propylen zu Acrolein und/oder Acrylsäure, die Umsetzung von o-Xylol zu Phthalsäureanhydrid oder die Umsetzung von p-Xylol zu Terephthalsäure. Bei solchen Reaktionen treten oft Zwischenprodukte, z. B. Unteroxidationsprodukte, oder Folgeprodukte aus, die im Reaktorprodukt unerwünscht sind und daher in der Kühlzone abgeschieden werden. So entsteht bei der o-Xylol-Oxidation zu Phthalsäureanhydrid das unerwünschte Zwischenprodukt Phthalid. Bei der Umsetzung von Propylen zu Acrolein und/oder Acrylsäure kann es dagegen zur unerwünschten Weiterreaktion der Zielprodukte zu Polymerisaten als Folgeprodukten kommen.

### Ausführungsbeispiel und Zeichnung:

Weiterbildungen, Vorteile und Anwendungsmöglichkeiten der Erfindung ergeben sich auch aus der nachfolgenden Beschreibung von Ausführungsbeispielen und den Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Anhand des in der Zeichung dargestellten Ausführungsbeispiels soll die Erfindung erläutert werden.
Fig. 1 der Zeichung zeigt eine beispielhafte Übersichtsskizze eines erfindungsgemäßen Rohrreaktors
Fig. 2 der Zeichnung zeigt beispielhaft einen erfindungsgemäßen Aufbau der Füllung eines Reaktorrohrs

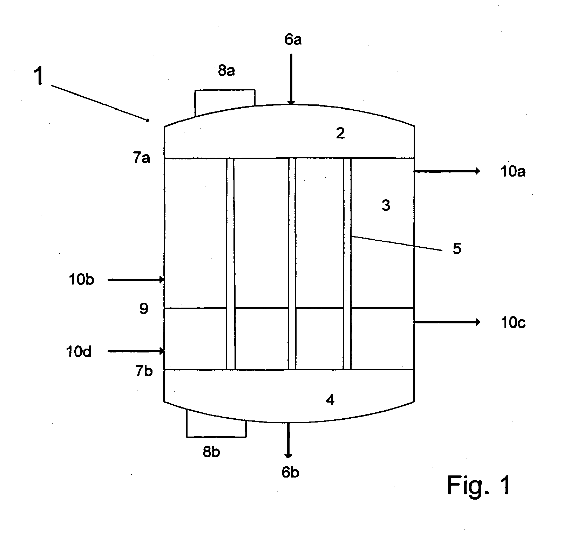

In Fig. 1 ist ein stehender Rohrreaktor (1) beispielhaft mit drei Reaktorrohren (5) dargestellt. Er besteht im Wesentlichen aus einem oben liegenden Gasverteilerraum (2), einem Mantelraum (3), einem unten liegenden Gassammelraum (4) und den Rohren (5) des Rohrbündels. Der Gasverteilerraum (2) und der Gassammelraum (4) werden jeweils durch eine Rohrplatte (7a,b) vom Mantelraum (3) getrennt. Der Gasverteilerraum (2) ist mit einem Stutzen (6a) als Einlass für das Gas und einem Hand- oder Mannloch (8a) ausgestattet. Durch das Hand- oder Mannloch (8a) ist ein Zugang geschaffen, um die Rohre (5) mit Katalysatormaterial zu füllen.

Der Gassammelraum (4) ist ebenfalls mit einem Stutzen (6b), als Auslass für das Gas, und einem Hand- oder Mannloch (8b) ausgestattet. Hier liefert das Hand- oder Mannloch (8b) einen Zugang, um die strukturierten Packungen in den Rohren auszutauschen. Der Mantelraum (3) ist durch eine Trennplatte (9) in eine obere Reaktionszone und eine untere Kühlzone geteilt. Die Stutzen (10 a,b,c,d) dienen als Zu- bzw. Abläufe für das flüssige Wärmeträgermedium.

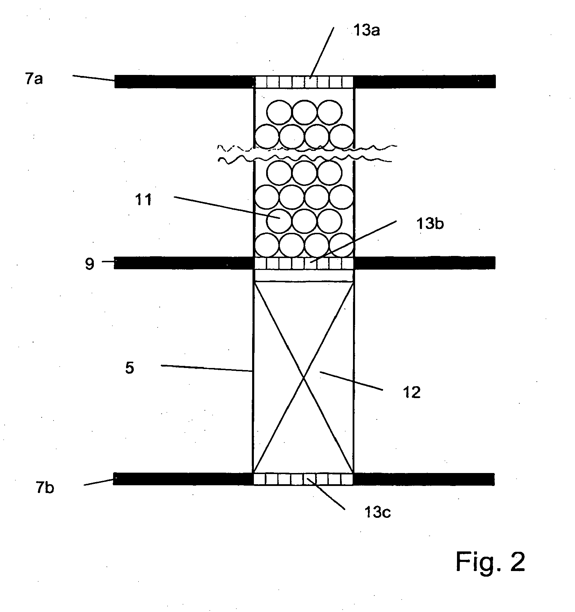

In Fig. 2 ist ein Längsschnitt durch ein Reaktorrohr (5) des Rohrbündels gezeigt. Das Reaktorrohr (5) verläuft von der oberen Rohrplatte (7a), durch die Trennplatte (9), die die Reaktions- von der Kühlzone des Reaktors trennt, zur unteren Rohrplatte (7b). In der Reaktionszone ist das Rohr mit einem Bett aus Katalysatormaterial (11) gefüllt. In der Kühlzone ist das Rohr mit einer strukturierten Packung (12) gefüllt. An der oberen und unteren Öffnung des Reaktorrohrs (5) und unterhalb des Katalysatorbetts ist jeweils eine gasdurchlässige, herausnehmbare Halterung (13 a,b,c) installiert. Diese können beispielsweise als Lochböden, Lochbleche, Gitter oder Siebböden ausgestaltet werden.

### Bezugszeichenliste

- (1): Rohrreaktor
- (2): Gasverteilerraum
- (3): Mantelraum
- (4): Gassammelraum
- (5): Reaktorrohr
- (6a,b): Stutzen für Gaseinlass- bzw. Auslass
- (7a,b): Rohrplatte
- (8a,b): Hand- bzw. Mannloch
- (9): Trennplatte
- (1 0a,b,c,d): Zu- und Abläufe für flüssiges Wärmeträgermedium
- (11): Katalysatormaterial
- (12): strukturierte Packung
- (13a,b,c): Halterung

## Patentansprüche

1. Rohrreaktor zur Durchführung einer heterogen katalysierten Gasphasenreaktion, umfassend Reaktorrohre mit mindestens einer Reaktionszone und mindestens einer Kühlzone, wobei die Reaktorrohre senkrecht stehend angeordnet sind, wobei das gasförmige Reaktionsgemisch von oben nach unten durch die Rohre strömt und dabei zuerst die Reaktionszone und dann die Kühlzone durchläuft, wobei die Reaktorrohre in ihrem oberen, in der Reaktionszone des Reaktors verlaufendem Teil, mit einer Schüttung festen, körnigen Katalysators und im unteren Teil, der Kühlzone des Reaktors, mit einer strukturierten Packung gefüllt sind, wobei die Katalysatorschüttung und die Packung jeweils durch eine gasdurchlässige, herausnehmbare Halterung in ihrer Position gehalten werden und wobei die Reaktorrohre durch indirekten Wärmeaustausch mit Wärmeträgermedien in der Reaktionszone bei endothermen Reaktionen beheizt bzw., bei exothermen Reaktionen, gekühlt werden, sowie in der Kühlzone gekühlt werden.

2. Rohrreaktor gemäß Anspruch 1, wobei die Reaktionszone in mehrere aufeinanderfolgende Abschnitte unterteilt ist, wobei rohrseitig die Art und Menge des Katalysatormaterials von Abschnitt zu Abschnitt variiert und wobei mantelseitig jeder Abschnitt mit einem separat einstellbaren Wärmeträgersystem ausgestattet ist.

3. Rohrreaktor gemäß einem der vorhergehenden Ansprüche, wobei die strukturierte Packung entlang ihrer Längsachse in mehreren Teile zerlegt ist.

4. Verfahren zum Austausch der strukturierten Packung in der Kühlzone eines Rohrreaktors nach Anspruch 1, umfassend folgende Schritte:
a) Außerbetriebnahme des Rohrreaktors,
b) optional Abkühlen und/oder Inertisieren des Rohrreaktors,
c) Öffnen des Zugangs zur Kühlzone an der Unterseite des Rohrreaktors,
d) Entnahme der strukturierten Packung,
e) Einsetzen einer neuen strukturierten Packung oder der gereinigten Originalpackung,
f) Verschließen des Zugangs zur Kühlzone an der Unterseite des Rohrreaktors,
g) Wiederinbetriebnahme des Rohrreaktors.

5. Verwendung eines Rohrreaktors nach Anspruch 1 bis 3 zur Durchführung von Selektivoxidationsreaktionen.

6. Verwendung nach Anspruch 5, wobei die Selektivoxidationsreaktion die Umsetzung von Propylen zu Acrolein und/oder Acrylsäure ist.

7. Verwendung nach Anspruch 5, wobei die Selektivoxidationsreaktion die Umsetzung von o-Xylol zu Phthalsäureanhydrid ist.

8. Verwendung nach Anspruch 5, wobei die Selektivoxidationsreaktion die Umsetzung von p-Xylol zu Terephthalsäure ist.

## Claims

1. A tubular reactor for carrying out a heterogeneously catalyzed gas phase reaction, comprising reactor tubes with at least one reaction zone and at least one cooling zone, wherein the reactor tubes are arranged vertically upright, wherein the gaseous reaction mixture flows through the tubes from top to bottom and in doing so passes first through the reaction zone and then through the cooling zone, wherein in their upper part extending in the reaction zone of the reactor the reactor tubes are filled with a bed of solid, granular catalyst and in the lower part, the cooling zone of the reactor, are filled with a structured packing, wherein the catalyst bed and the packing each are held in their position by a gas-permeable, removable holder, and wherein the reactor tubes are heated in endothermal reactions, and cooled in exothermal reactions, by indirect heat exchange with heat-transfer media in the reaction zone, and are cooled in the cooling zone.

2. The tubular reactor according to claim 1, wherein the reaction zone is divided into a plurality of succeeding sections, wherein on the tube side the kind and quantity of the catalyst material varies from section to section and wherein on the shell side each section is equipped with a separately adjustable heat transfer system.

3. The tubular reactor according to any of the preceding claims, wherein the structured packing is split into several parts along its longitudinal axis.

4. A method for replacing the structured packing in the cooling zone of a tubular reactor according to claim 1, comprising the following steps:
a) shutdown of the tubular reactor,
b) optionally cooling and/or inerting the tubular reactor,
c) opening the access to the cooling zone on the bottom side of the tubular reactor,
d) removal of the structured packing,
e) inserting a new structured packing or the cleaned original packing,
f) closing the access to the cooling zone on the bottom side of the tubular reactor,
g) recommissioning of the tubular reactor.

5. Use of a tubular reactor according to claims 1 to 3 for carrying out selective oxidation reactions.

6. The use according to claim 5, wherein the selective oxidation reaction is the conversion of propylene to acrolein and/or acrylic acid.

7. The use according to claim 5, wherein the selective oxidation reaction is the conversion of o-xylene to phthalic anhydride.

8. The use according to claim 5, wherein the selective oxidation reaction is the conversion of p-xylene to terephthalic acid.

## Revendications

1. Réacteur à faisceau tubulaire pour effectuer une réaction en phase gazeuse en catalyse hétérogène, comprenant des tubes de réacteur ayant au moins une zone de réaction et au moins une zone de refroidissement, les tubes du réacteur étant disposés verticalement, le mélange de réaction gazeux passant de haut en bas dans les tubes et parcourant ainsi d'abord la zone de réaction et ensuite la zone de refroidissement, les tubes du réacteur étant remplis, dans leur partie supérieure s'étendant dans la zone de réaction du réacteur, de grains solides en vrac de catalyseur et dans la partie inférieure, qui est la zone de refroidissement du réacteur, d'un garnissage structuré, le catalyseur en vrac et le garnissage étant maintenus respectivement en leur position par un support perméable aux gaz et pouvant être retiré, et les tubes du réacteur étant, pour des réactions endothermiques, chauffés ou, pour des réactions exothermiques, refroidis dans la zone de réaction par échange de chaleur indirecte avec des agents caloporteurs ainsi que refroidis dans la zone de refroidissement.

2. Réacteur à faisceau tubulaire suivant la revendication 1, dans lequel la zone de réaction est subdivisée en plusieurs parties qui se succèdent, dans lequel, du côté d'un tube, la nature et la quantité du catalyseur varient d'une partie à l'autre, et du côté de l'enveloppe, chaque partie est équipée d'un système caloporteur réglable distinct.

3. Réacteur à faisceau tubulaire suivant l'une des revendications précédentes, dans lequel le garnissage
structuré se décompose en plusieurs parties le long de son axe longitudinal.

4. Procédé de remplacement du garnissage structuré dans la zone de refroidissement d'un réacteur à faisceau tubulaire suivant la revendication 1, comprenant les stades suivants :
a) on met hors de fonctionnement le réacteur tubulaire,
b) éventuellement on refroidit et/ou on rend inerte le réacteur à faisceau tubulaire,
c) on ouvre l'accès à la zone de refroidissement du côté inférieur du réacteur à faisceau tubulaire,
d) on retire le garnissage structuré,
e) on met un nouveau garnissage structuré ou le garnissage d'origine nettoyé,
f) on ferme l'accès à la zone de refroidissement du côté inférieur du réacteur à faisceau tubulaire,
g) on remet le réacteur tubulaire en fonctionnement.

5. Utilisation d'un réacteur à faisceau tubulaire suivant la revendication 1 à 3 pour effectuer des réactions d'oxydation sélective.

6. Utilisation suivant la revendication 5, dans laquelle la réaction d'oxydation sélective est la réaction du propylène sur l'acroléine et/ou sur l'acide acrylique.

7. Utilisation suivant la revendication 5, dans laquelle la réaction d'oxydation sélective est la réaction de l'orthoxylène sur l'anhydride phtalique.

8. Utilisation suivant la revendication 5, dans laquelle la réaction d'oxydation sélective est la réaction du paraxylène sur l'acide téréphtalique.
